# EUROPÄISCHE PATENTANMELDUNG

(11) **EP 1 245 885 A1**
(43) Veröffentlichungstag der Anmeldung: **02.10.2002**
(21) Anmeldenummer: 02003398.1
(22) Anmeldetag: 14.02.2002
(51) Int. Cl.: F16L 11/16

(54) **Mehrlagiger Schlauch aus profiliertem Bandmaterial**

(30) Priorität: 19.03.2001 DE 10113182
(71) Anmelder: Westfalia Metallformtechnik GmbH & Co, 57271 Hilchenbach (DE)
(72) Erfinder: Hupertz, Günter, 57482 Wenden (DE)
(74) Vertreter: Valentin, Ekkehard, Dipl.-Ing.

(57) **Zusammenfassung**

Bei einem Schlauch, hergestellt durch schraubenförmiges, mehrlagiges Wickeln von profiliertem Bandmaterial mit eingehakter Bindung der Wickellagen (2,3), wobei an einer Wickellage (2,3) ein im wesentlichen parallel zur Schlauchlängsachse umgebogener horizontaler Profilabschnitt (7,9)-ausgebildet ist, sind beide Wickellagen (2,3) mit einem Profilendabschnitt (7,9) versehen, die einander überlappen, und dem Profilendabschnitt (7,9) mindestens einer Wickellage (2,3) ist eine im wesentlichen vertikal zur Schlauchlängsachse (8) aufgerichtete schlaufenartige Ausformung (5,5a,5b).

## Beschreibung

Die Erfindung betrifft einen Schlauch, hergestellt durch schraubenförmiges, mehrlagiges Wickeln von profiliertem Bandmaterial mit eingehakter Bindung der Wikkellagen, wobei an einer Wickellage ein im wesentlichen parallel zur Schlauchlängsachse umgebogener horizontaler Profilendabschnitt ausgebildet ist.

Ein derartiger Schlauch, der vorrangig an Abgasanlagen mit den dort hohen Anforderungen an die Gasdichtheit verwendet wird und mit jedem beliebigen Querschnitt, z.B. rund oder eckig, in üblicher Weise hergestellt werden kann, ist durch die DE 34 41 064 C2 bekanntgeworden. Die Überdeckung in Form des horizontalen Profilabschnitts untergreift dort schlauchinnenseitig eine in entgegengesetzter Richtung zu einer schlaufenförmigen Bandverdopplung umgebogenes Hakenprofil der benachbarten Wickellage, wobei dieses Hakenprofil von der Bandverdopplung in Achsrichtung des Schlauches verschiebbar aufgenommen ist. Bei diesen im Längsschnitt des Schlauches gesehen S-förmigen Wickellagen wird somit jeweils eine schlaufenförmige Bandverdopplung einer ersten Wickellage mit einer nur einlagigen, umgebogenen Profilschlaufe der jeweils anderen Wickellage zu einer in Achsrichtung verschiebbaren Schlaucheinheit agraffartig verhakt, d.h. der Schlauch läßt sich sowohl strecken als auch stauchen, wobei die Wickellagen sich entsprechend gegeneinander verschieben. Dieses Bewegungsspiel wird durch einen geringen Abstand ermöglicht, der den horizontalen Verschiebeweg oder auch die Biegsamkeit des Schlauches bestimmt bzw. begrenzt und zwischen den jeweilig vertikal verlaufenden Abschnitten der S-Form und dem vertikalen Endabschnitt der einlagig abgebogenen Profilschlaufe zur Verfügung steht. Bei diesem agraffähnlichen Profil besitzt der Schlauch durch die Bandverdopplung und die Überdeckung aufgrund der verlängerten Profil-Endabschnitte eine schlauchinnenseitige Gestaltung mit Schuppen, während er außenseitig aber in den Bereichen mit dem für das Bewegungspiel benötigten Abständen offen ist.

Der Erfindung liegt die Aufgabe zugrunde, einen gattungsgemäßen Schlauch, insbesondere für Abgasleitungen von Brennkraftmaschinen, zu schaffen, der sich einfacher und mit höherer Qualität herstellen läßt.

Diese Aufgabe wird erfindungsgemäß dadurch gelöst, daß beide Wickellagen mit einem Profilendabschnitt versehen sind, die einander überlappen, und dem Profilendabschnitt mindestens einer Wickellage eine im wesentlichen vertikal zur Schlauchlängsachse aufgerichtete schlaufenartige Ausformung vorgeschaltet ist. Es wird somit ein einfaches eingehaktes Profil als Doppellamellenschlauch geschaffen, das durch Aufdrehen nicht auseinanderfallen kann. Trotz des für die lediglich einlagigen Profilendabschnitte benötigten geringeren Materials wird eine hohe Dichtheit erreicht. Die Wickellagen stützen sich an der schlaufenartigen Ausformung, deren Kontur rund, eckig oder oval sein kann, ab.

Eine bevorzugte Ausführung der Erfindung sieht vor, daß die Wickellagen schlauchaußenseitig mit einer dem Profilendabschnitt und der vertikalen Ausformung vorgelagerten horizontalen Bandverdoppelung ausgebildet sind. Hiermit läßt sich ein Lamellenschlauch mit einem einseitigen Agraff erreichen. Die am Umfang des Schlauches ausgebildete Bandverdopplung dichtet den Schlauch nach außen und die endseitige Überdeckung dichtet den Schlauch nach innen besonders gut ab. Bei einem solche Wickellagen aufweisenden Schlauch ist eine weite Vorprofilierung möglich, bevor der Schlauch gewickelt wird, was für die Herstellung große Vorteile mit sich bringt. Außerdem liegen von innen nach außen dennoch weniger Materiallagen als bei bekannten Schläuchen vor, womit sich aufgrund der weniger vorhandenen variablen Größen eine den Ausschuß verringernde, gleichbleibende Herstellqualität erreichen läßt.

Nach einem Vorschlag der Erfindung ist der vertikalen Ausformung eine weitere schlaufenartige, horizontal ausgebildete Bandverdopplung vorgeschaltet, die diametral und in einer niedrigeren Ebene als die erste Bandverdopplung umgebogen ist. Bei einem solchermaßen profilierte Wickellagen aufweisenden Schlauch läßt sich ein Doppellamellenschlauch erreichen, der sowohl eine äußere als auch eine innere, nämlich in der niedrigeren Ebene verlaufende Bandverdopplung aufweist.

Nach einer Ausgestaltung der Erfindung sind die Profilendabschnitte mit einer schlaufenartigen Erhöhung und darin angeordneter Dichtung ausgebildet. Diese in der Ausführung des Schlauches mit Bandverdoppelung nicht über den von den außenliegenden Bandverdopplungen definierten Umfang des Schlauches hinausgehende Erhöhung befindet sich in dem ohnehin vorhandenen Freiraum aufgrund des Abstandes von der stützenden, vertikalen Ausformung bis zur außenliegenden Bandverdopplung und ermöglicht es somit, in einfacher Weise eine zusätzliche Umfangsdichtung vorzusehen.

Weitere Einzelheiten und Vorteile der Erfindung ergeben sich aus den Ansprüchen und der nachfolgenden Beschreibung von in den Zeichnungen dargestellten Ausführungsbeispielen der Erfindung. Es zeigen:
- Fig. 1: als Teil-Längsansicht drei Wickellagen einer ersten Ausführung eines Schlauches;
- Fig. 2: eine Abwandlung des Schlauches nach Fig. 1 mit zudem dargestellten Dichtungsvarianten;
- Fig. 3: als Teil-Längsansicht drei Wickellagen einer anderen Ausführung eines Schlauches;
- Fig. 4: in einer Teil-Längsansicht zwei mit einer anderen Profilierung ausgebildete Wickellagen eines Schlauches; und
- Fig. 5: als Teil-Längsansicht zwei eine Profilierung nach Fig. 1 mit demgegenüber aber noch eine zusätzliche Dichtungs-Erhöhung aufweisende Wickellagen eines Schlauches.

In den Figuren dargestellte Schläuche 1, 10, 100, 200 bzw. 300 bestehen aus zahlreichen Windungen, die durch schraubenförmiges Wickeln von beispielsweise metallischem profilierten Bandmaterial mehrlagig hergestellt sind. Die einzelnen Wickellagen 2 und 3 wiederholen sich wechselweise und sind über die Länge des Schlauches durch Einhakungen formschlüssig aneinandergereiht miteinander verbunden.

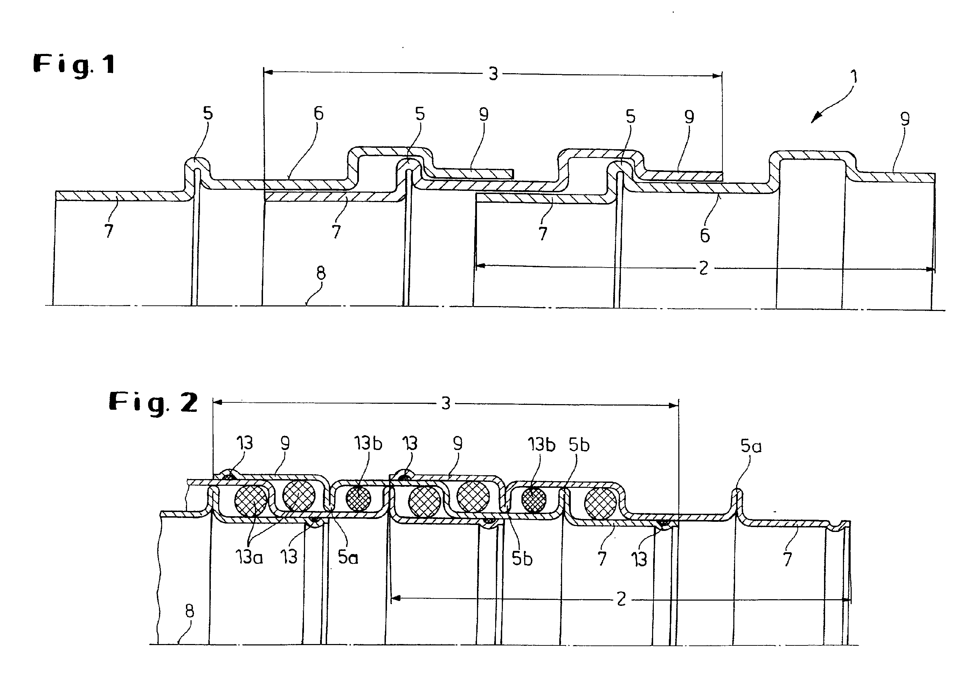

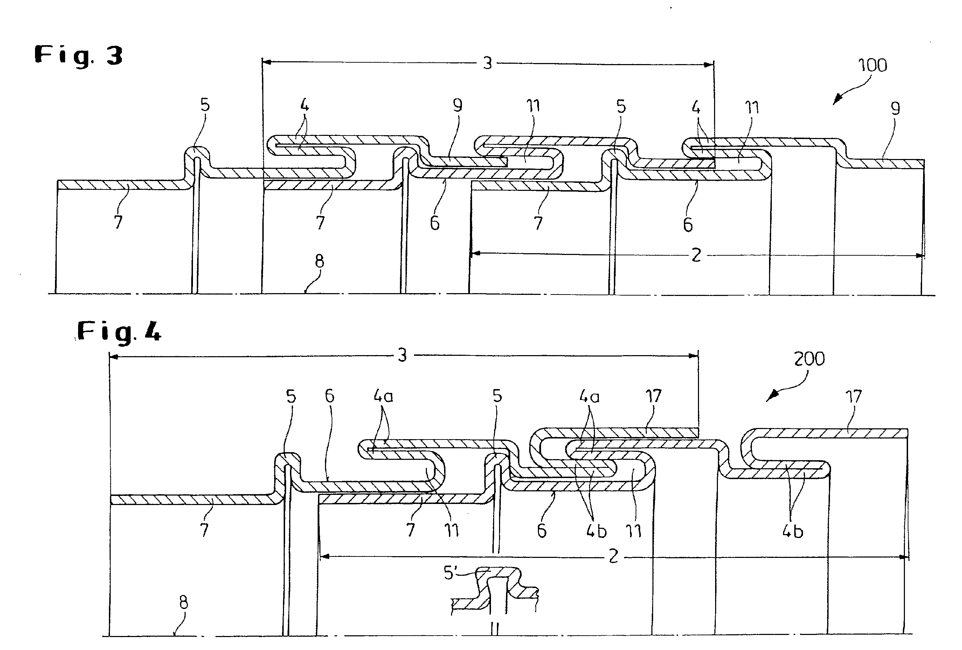

Der in Fig. 1 dargestellte Schlauch 1 besitzt Wickellagen 2, 3 mit einfach eingehakter Bindung. Die profilierten Wickellagen 2, 3 sind mit einer schlaufenartigen vertikalen Ausformung 5 ausgebildet und mit sich überlappenden bzw. -deckenden Profilendabschnitten 7, 9 versehen. Bei der demgegenüber abgewandelten Ausführung nach Fig. 2 ist bei jeder Wickellage 2, 3 den Profilendabschnitten 7, 9 jeweils eine schlaufenartige vertikale Ausformung 5a, 5b zur Einhakabstützung vorgeschaltet. Außerdem werden dort verschiedene Möglichkeiten zur Anordnung von Dichtungen bzw. Dichtschnüren 13 bzw. 13a und 13b, die sich in den vorliegenden bzw. geschaffenen Freiräumen variabel unterbringen bzw. miteinander kombinieren lassen, gezeigt.

Bei dem Schlauch 100 nach Fig. 3 weisen die Wickellagen 2, 3 eine Profilierung mit einer außenliegenden Bandverdopplung 4 sowie ebenfalls eine schlaufenartige vertikale Ausformung 5 in einem sich anschließenden Profilabschnitt 6, der endseitig in eine parallel zur Schlauchlängsachse 8 verlaufende Überdeckung 7 endet, und den sich zu der Überdeckung 7 diametral erstreckenden Profilendabschnitt 9 auf. Zur Einhakung bzw. Anbindung und Abstützung tauchen die von den Ausformungen 5 entfernten Profilendabschnitte 9 in den Freiraum 11 zwischen den außenliegenden Bandverdopplungen 4 und dem schlauchinnenseitigen Profilabschnitt 6 ein, der seinerseits von der Überdeckung 7 untergriffen wird, wobei die Profile der einzelnen Wickellagen 2, 3 eine Abstützung jeweils an den vertikalen Ausformungen 5 finden.

Bei der Profilierung der Wickellagen 2, 3 nach Fig.4 ist in einer niedrigeren Ebene als die erste Bandverdopplung 4a eine weitere schlaufenartige, horizontal ausgebildete Bandverdopplung 4b in entgegengesetzter Richtung zu der ersten, außenliegenden Bandverdopplung 4a umgebogen. Die weitere, tiefer liegende Bandverdopplung 4b endet mit einem Profilabschnitt 17, der jeweils die äußere, erste Bandverdopplung 4a von außen überdeckt. Zur agraffartigen Verhakung bzw. Anbindung tauchen jeweils die tieferliegenden, inneren Bandverdopplungen 4b in die Freiräume 11 zwischen jeweils den außenliegenden, ersten Bandverdopplungen und den inneren Profilabschnitt 6 ein, der auch hier wieder die vertikale Ausformung 5 zur Abstützung der Einhakung bereitstellt. In Fig. 4 ist als Einzelheit herausgezogen eine andere Konturgebung der vertikalen Ausformung 5' gezeigt. Aufgrund der bei dieser Profilierung der Wickellagen 2, 3 sowohl außen als auch innen vorhandenen Bandverdopplungen 4a bzw. 4b liegt ein Doppellamellenschlauch 200 vor, der zudem innen und außen die dichtenden Überdeckungen 7 bzw. 17 aufweist.

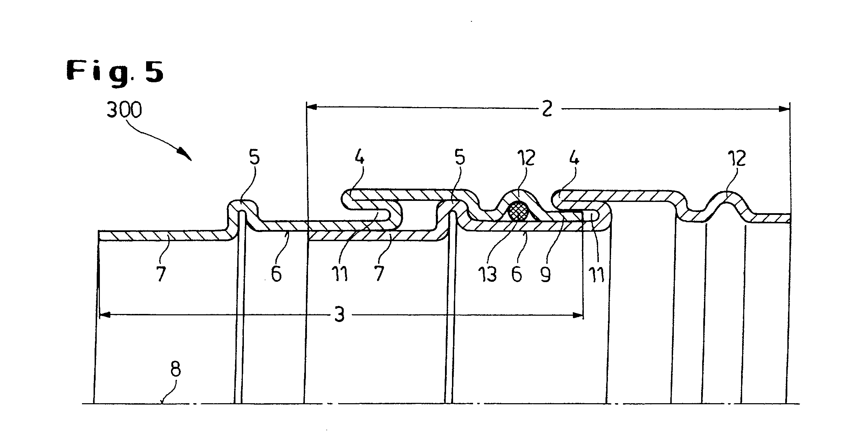

Die Profilierung und Einhakung bzw. Abstützung der Wickellagen 2, 3 nach Fig. 5 entspricht für den dargestellten Schlauch 300 der Ausführung nach Fig. 3, so daß dort schon erläuterte und eingetragene Bezugsziffern nach hier übernommen wurden. Demgegenüber abweichend ist allerdings der sich diametral zu der Überdekkung 7 erstreckende Profilendabschnitt 9 mit einer schlaufenartigen Erhöhung 12 ausgebildet. In deren Hohlraum ist - wie vergleichbar auch schon in Fig. 2 dargestellt - eine zusätzliche Umfangsdichtung 13 angeordnet.

## Patentansprüche

1. Schlauch, hergestellt durch schraubenförmiges, mehrlagiges Wickeln von profiliertem Bandmaterial mit eingehakter Bindung der Wickellagen, wobei an einer Wickellage ein im wesentlichen parallel zur Schlauchlängsachse umgebogener horizontaler Profilendabschnitt ausgebildet ist,
**dadurch gekennzeichnet,**
**daß** beide Wickelagen (2, 3) mit einem Profilendabschnitt (7, 9) versehen sind, die einander übrlappen, und dem Profilendabschnitt (7 bzw. 9) mindestens einer Wickellage (2, 3) eine im wesentlichen vertikal zur Schlauchlängsachse (8) aufgerichtete schlaufenartige Ausformung (5; 5a, 5b) vorgeschaltet ist.

2. Schlauch nach Anspruch 1,
**dadurch gekennzeichnet,**
**daß** die Wickellagen (2, 3) schlauchaußenseitig mit einer dem Profilendabschnitt (7 bzw. 9) und der vertikalen Ausformung (5a bzw. 5b) vorgelagerten horizontalen Bandverdoppelung (4, 4a) ausgebildet sind.

3. Schlauch nach Anspruch 1,
**dadurch gekennzeichnet,**
**daß** der vertikalen Ausformung (5) eine weitere schlaufenartige, horizontal ausgebildete Bandverdopplung (4b) vorgeschaltet ist, die diametral und in einer niedrigeren Ebene als die erste bzw. zu der ersten Bandverdopplung (4a) umgebogen ist.

4. Schlauch nach Anspruch 2 oder 3,
**dadurch gekennzeichnet,**
**daß** über die Länge des Schlauches (1, 10, 100) jeweils Wickellagen (2, 3) mit einer vertikalen Ausformung (5) und sich anschließender Überdeckung (7) sowie einer horizontalen Bandverdopplung (4) oder Wickellagen (2, 3) mit einer der vertikalen Ausformung (5) vorgeschalteten, außenliegenden schlaufenartigen Bandverdopplung (4a) und einer diametral sowie in niedrigerer Ebene zur ersten -horizontalen Bandverdopplung (4a) umgebogenen weiteren Bandverdopplung (4b) aufeinanderfolgen.

5. Schlauch nach einem der Ansprüche 1 bis 4,
**dadurch gekennzeichnet,**
**daß** die Profilendabschnitte (7 bzw. 9) mit einer schlaufenartigen Erhöhung (12) ausgebildet sind und in der Erhöhung (12) eine Dichtung (13) angeordnet ist.
